# EUROPEAN PATENT APPLICATION

(11) **EP 4 783 069 A1**
(43) Date of publication of application: **29.07.2026**
(21) Application number: 25153945.8
(22) Date of filing: 24.01.2025
(51) Int. Cl.: G06N 3/0455, G06N 3/0475, G06N 3/0895, G06N 3/0495, G06N 3/084

(54) **SYSTEM AND METHOD FOR FOUNDATION MODEL FUNCTIONALITIES FOR TIME SERIES DATA OF OPERATIONAL PROCESSES WITH INDUSTRIAL CONTEXT INFORMATION FOR INDUSTRIAL APPLICATIONS**

(71) Applicant: ABB SCHWEIZ AG, 5400 Baden (CH)
(72) Inventor: SCHOCH, Nicolai, 69120 Heidelberg (DE); TAN, Ruomu, 68309 Mannheim (DE); BORRISON, Reuben, 68782 Brühl (DE)
(74) Representative: Maiwald GmbH

(57) **Abstract**

It is disclosed a computer-implemented method for obtaining, for industrial applications, foundation model functionalities for time series data of operational processes with industrial context information, the method comprising: transforming the time series data of operational processes associated with at least a first industrial plant into a sequence of time units associated with respective pieces of the operational processes; attaching time units of the sequence of time units with the industrial context information, wherein pieces of the industrial context information are associated with the pieces of the operational processes and wherein the time units are attached with concurrent pieces of the industrial context information; obtaining by means of a tokenization method a sequence of context tokens from the attaching, wherein one context token represents one time unit to which concurrent pieces of the industrial context information are attached; training a generative AI model on the sequence of context tokens using a loss function; and using the trained generative AI model having the foundation model functionalities for at least one of: i) finetuning the trained generative AI model for a second industrial plant different from the first industrial plant and ii) forecasting a further progression of an operational process for the second industrial plant.

## Description

### FIELD OF THE INVENTION

The invention relates to a method for obtaining, for industrial applications, foundation model functionalities for time series data of operational processes with industrial context information. The invention further related to a data processing apparatus, a data processing system, a computer-readable medium, a computer program product and a use, in an industrial context, of a trained generative AI model having the foundation model functionalities.

### BACKGROUND

When a new industrial plant is engineered and started to be operated for example, two requirements need to be fulfilled in order to have for the new industrial plant reasonable analytics and machine learning (ML)-based solutions, for example like operation monitoring, anomaly detection, maintenance due date prediction, etc. First, long times of data recording of operational processes of the new industrial plant are required for thereon-based ML training. Second, long times for actually doing this data-driven training are required, before an actual ML-based solution can get deployed and be beneficially operated.

Hence, in an industrial application context, there is the problem of how to make the application of ML-based solutions for industrial plants, in particular for new industrial plants, more efficient, more reliable and at the same time less time-consuming?

Hence, there is room and need for improvement regarding the application of ML-based solutions for industrial plants, in particular for new industrial plants.

### SUMMARY

In view of the above, it is an object of the present disclosure to overcome at least part of the drawbacks available regarding the application of ML-based solutions for industrial plants, in particular for new industrial plants.

Therefore, to address one or more of these drawbacks, there is provided, in a first aspect, a computer-implemented method for obtaining, for industrial applications, foundation model functionalities for time series data of operational processes with industrial context information. The method comprises transforming the time series data of operational processes associated with at least a first industrial plant into a sequence of time units associated with respective pieces of the operational processes. The method further comprises attaching time units of the sequence of time units with the industrial context information, wherein pieces of the industrial context information are associated with the pieces of the operational processes and wherein the time units are attached with concurrent pieces of the industrial context information. The method further comprises obtaining by means of a tokenization method a sequence of context tokens from the attaching, wherein one context token represents one time unit to which concurrent pieces of the industrial context information are attached. The method further comprises training a generative artificial intelligence (Al) model on the sequence of context tokens using a loss function. And the method further comprises using the trained generative AI model having the foundation model functionalities for:
i) finetuning the trained generative AI model for a second industrial plant different from the first industrial plant, and/or
ii) forecasting a further progression of an operational process for the second industrial plant.

It shall be noted that the term "foundation model functionalities" is meant to refer to functionalities of a ML-based model. In more detail, it is meant that a ML-based model has a broad knowledge and understanding of the things-of-interest, which is out-of-the-box generally pretty-well applicable or usable without requiring any additional further work like further dedicated resource-consuming data-driven training, calibration, tuning, or optimization. Said in other words, the ML-based model having the foundation model functionalities may have a broad knowledge and understanding in, for example, starting up and/or optimizing operational processes of one or more certain industrial plants being the things-of-interest. The one or more industrial plant may be understood to represent, for example, one or more industrial plants used in a certain industrial field like in the mining industry or in the chemical industry. Then, in case an industrial plant is newly incorporated or embedded in such certain industrial field for example, the ML-based model having the foundation model functionalities is already pretty-well applicable, i.e. out-of-the-box pretty-well applicable on the newly incorporated, embedded or installed industrial plant.

Hence, the term "at least a first industrial plant" comprises that time series data of operational processes of one or more industrial plants are transformed. These one or more industrial plants may be associated with same or different industrial fields. For example, the one or more industrial plants may all be applied in the mining industry, or a first share of the one or more industrial plants may be applied in the mining industry and a second share of the one or more industrial plants is applied in the chemical industry. Furthermore, these one or more industrial plants may be associated with same or different operational processes. For example, for each of the one or more industrial plants, time series data of same operational processes or of a same type of operational processes may have been recorded, for example operational processes for bath generation in the chemical industry. Or, for each of a first share of the one or more industrial plants, time series data of a first operational process or first type of operational processes may have been recorded, for example operational processes for bath generation in the chemical industry, and for each of a second share of the one or more industrial plants, time series data of a second operational process or second type of operational processes may have been recorded, for example operational processes for extracting raw materials of interest from mined rocks.

Moreover, it shall be understood that these one or more industrial plants do not comprise the second industrial plant. However, the second industrial plant may be associated with a certain industrial field, for example with a target industrial field, and the second industrial plant may perform a target operational process or operational processes of a target type of operational processes. The second industrial plant may be related to the one or more industrial plants. For example, at least one industrial plant of the one or more industrial plants may be associated with an industrial field that is the same as the target industrial field. Additionally or alternatively, for example, at least one operational process or type of operational processes that is performed by the one or more industrial plants may be the same as the target operational process or target type of operational processes that is performed by the second industrial plant.

By the expression "time series data of operational processes with industrial context information" it is meant time series as observations or recordings of one or more components of an industrial plant, of quantities and/or events along with their contexts and/or environmental conditions. The one or more components may comprise distillation columns, level controllers, reactors or tanks for example. The quantities may comprise physical quantities, tank levels, sensor values or key performance indicators (KPIs) for example. The events may comprise logs or alarms for example. The contexts and/or environmental conditions may comprise plant topologies, specific industry contexts, seasonality, weather, daytime, temperature or video recordings for example.

By the expression "time units associated with respective pieces of the operational processes" it may be understood that pieces of operational processes are associated with certain time periods or time points. For example, it may be assumed herewith for explanation purposes only that an operational process comprises a sequence of three pieces of operational processes, i.e. a first piece of the operational process, a second piece of the operational process and a third piece of the operational process. Each of the first piece, the second piece and the third piece may start at a certain time point and may last for a certain time period. For example, the first piece may start at a first time and may last for a first time period, the second piece may start at a second time and may last for a second time period, and the third piece may start at a third time and may last for a third time period. Hence, each of the first piece, the second piece and the third piece may be associated with a certain time point and/or time period. Consequently, when looking at a certain time point and/or time period, a corresponding piece of the operational process can be identified.

By the expression "attaching time units of the sequence of time units with the industrial context information, wherein pieces of the industrial context information are associated with the pieces of the operational processes and wherein the time units are attached with concurrent pieces of the industrial context information" it is meant that, said in other words, time units are linked to corresponding, i.e. concurrent industrial context information. For example, it may be assumed that a time unit represents a target time period, and that the time unit is attached with or linked to industrial context information that are available, present or have occurred during the target time period. For example, it may be assumed herewith for explanation purposes only that the industrial context information comprises a first piece of industrial context information, a second piece of industrial context information and a third piece of industrial context information. The first piece of industrial context information may comprise information about a tank of an industrial plant during an operational process. The second piece of industrial context information may comprise a temperature information of an environment around the tank of the industrial plant during the operational process. The third piece of industrial context information may comprise a pressure at a valve of the tank of the industrial plant during a shut-down process. Hence, the first piece of industrial context information and the second piece of industrial context information may refer to a same time period. Namely, during operation of the operational process, for example during start-up of the tank, a condition of the tank is monitored and a surrounding temperature of the tank is measured. Hence, a start-up time unit that corresponds to the start-up of the tank may be attached with the first piece of industrial context information and the second piece of industrial context information. In this example, the first and second pieces of industrial context information may be understood as concurrent pieces of the industrial context information. Moreover, in case the operational process is not the start-up of the tank but a shut-down process, i.e. a shut-down of the tank, a shut-down time unit that corresponds to the shut-down of the tank maybe attached with the first piece of industrial context information, the second piece of industrial context information and the third piece of industrial context information. In this example, the first, second and third pieces of industrial context information may be understood as concurrent pieces of the industrial context information.

Tokenization, here meant in the context of Generative Al, is a commonly used technique in natural language processing to split paragraphs and sentences into smaller units that can be more easily assigned with a semantic meaning. For time series, the same can be done, too: A times series, i.e., a series of values (which have time stamps, just like the words in a sentence have an order, too), can be broken down into segments with certain patterns, e.g., a part where the time series values go monotonously down, or a part where they go up, or where they go up and fast down, or in a sine/cosine curve, or more like a heart-beat, etc. These typical patterns (like words or parts of words) can be taken as tokens. Additionally, when assessing time series with context, then the parts of the time series have additional characteristics. For example, the time series segment with monotonically decreasing values can correspond to different conditions, such as in which section of the plant it was recorded (e.g., a decreasing temperature value in a distillation column vs. a decreasing pressure value in a sealed tank), or under which weather conditions it was recorded (as opposed to other conditions). And then these unique combinations are again assigned unique tokens, too. Hence, tokenization, here meant in the context of Generative Al, is a term that describes breaking a large amount of sequential data, e.g., a document or body of text or a sequence of values with time stamps, into small units with additional context information. These small units are called tokens. One can define tokens by certain character sequences, punctuation, or other definitions depending on the type of tokenization. Doing so in the end makes it easier for a machine to process the document or text or time series or time series along with contexts (where these contexts can again be textual content or values).

It shall be noted that the start-up time unit for above, to which the first and second pieces of industrial context information are attached, may be understood to represent a first context token or start-up context token. The shut-down time unit, to which the first, second and third pieces of industrial context information are attached, may be understood to represent a second context token or shut-down context token. In general, context tokens may be tokens that capture a time unit, like a time series period or a time series point for example, along with the industrial context information.

It shall be noted that by the expression "training a generative AI model on the sequence of context tokens", it is meant that, said in other words, the sequence of context tokens (i.e. the data comprising the sequence of context tokens) is used as input data for training the generative AI model.

Moreover, it shall be noted that the trained generative AI model having the foundation model functionalities may be used in three ways. First, the trained generative AI model may be finetuned for the second industrial plant. Second, the trained generative AI model may be used, without being finetuned, to forecast the further progression of an operational process for the second industrial plant. Third, the finetuned trained generative AI model may be used to forecast an operational process for the second industrial plant.

The method according to the first aspect is advantageous in that it may participate in enabling for finetuning a generative AI model for application on a certain industrial plant in an efficient, reliable and less time-consuming way. It may further participate in enabling for zero-shot prompting for prediction or forecasting.

In more detail, the trained generative AI model may be understood to be a foundation model for time series with contexts in industrial applications. An important benefit of such foundation models lies in them being foundation models, i.e., trained on large time series data sets, which allow for zero-shot prompting for prediction or forecasting. Hence, foundation models would only require very little input data, i.e. input time series data sequence "with contexts" for example, in order to thereon-based kick-start, for example for a newly installed industrial plant, and to predict into the future for such newly installed industrial plant with a pretty-good and better-than-nothing multimodal, like time series and topology for example, model. Confidentiality improvement can be made by sampling multiple future trajectories in order to thus obtain probabilistic forecast distributions, along with corridors of uncertainties for example. Being based on language model architecture, the trained generative AI model can be expected to reveal similar next-token-prediction capabilities, similarly impressive to language models and their next-word-prediction capabilities. Expanding the state-of-the-art of pure time-series forecasting, thanks to the here-disclosed combination with industrial context information, the trained generative AI model can be expected to be a strong foundation for providing reasonably-well quick outputs, particularly where otherwise training would require large resource efforts, both with regard to time, for training a dedicated model, and cost, for compute and expertise, and also with regard to data. As said, once the trained generative AI model is available, it can be used as a model to generate using only very little input data already pretty good forecasts.

Moreover, there is enabled benefit for an operator. Regarding greenfield topologies and a "greenfield industrial plant", from only one week of data recorded for example, thanks to "foundation model knowledge" and zero-shot capability, after finetuning the trained generative AI model, i.e. after finetuning the certain foundation model with this recorded one-week-data, one can already get quite reasonable predictions for operational processes of the "greenfield industrial plant", and no specific model could have been trained earlier or better by using one week of recorded data only. Hence, the trained generative AI model could be very valuable particularly in situations where without much delay a time-series-prediction-model is required; for whichsoever use case, no matter if pattern analysis or anomaly detection or running mode classification. Regarding brownfield topologies and a "brownfield industrial plant", the trained generative AI model may lose the reliability in comparison to a model trained only on the certain "brownfield industrial plant", but the trained generative AI model would get more accurate compared to after one-week-only.

Furthermore, there is enabled also benefit for a dashboard user. A dashboard user, who works with dashboards that are based on algorithms observing or monitoring processes in operations, which are based on time series data, and if the dashboard user has AI/ML models or algorithms to analyze this time series data, the dashboard user will be able to faster set up dashboards, using the trained generative AI model.

In addition, when urgent predictions are needed for one or more operational processes of an industrial plant, and/or when no dedicated model is available or affordable for an industrial plant, then the trained generative AI model is very valuable, and reliability can be increased by sampling several inference runs and thus obtaining a probabilistic forecast distribution.

According to several examples of the present disclosure, the transforming may comprise transforming the time series data into the sequence of time units by mean scaling and/or quantizing the time series data to obtain the sequence of time units.

Hence, the transforming is performed in an efficient way.

According to several examples of the present disclosure, the attaching may comprise attaching each of the time units with a context vector that is related to the pieces of the industrial context information that are associated with the respective time unit.

Hence, the time units are attached with corresponding industrial context information in an efficient way, and a connection or relation between a time unit and corresponding industrial context information is made traceable by use of the context vector.

According to several examples of the present disclosure, the at least first industrial plant may comprise a plurality of plant components. The time series data may comprise plant component time series data of plant component operational processes associated with the plurality of plant components. The plant component operational processes may be comprised by the pieces of the operational processes and wherein pieces of the plant component time series data may correspond to one or more respective plant components of the plurality of plant components. The pieces of the industrial context information may comprise plant component industrial context information that are associated with the plant component operational processes.

It should be noted that, said in other words, the intention of considering the plurality of plant components is that the time series data of the operational processes are broken down to single plant components. It shall be noted that the operational processes of an industrial plant may be understood to comprise plant component operational processes of plant components of the industrial plant. Thus, the pieces of the operational processes of the industrial plant may comprise the plant component operational processes. Each plant component may be associated with corresponding plant component time series data, i.e. respective plant component time series data may be recorded for each plant component. For each plant component, respective plant component industrial context information may be identified. Hence, a context token may represent a time unit to which concurrent pieces of plant component industrial context information are attached. The concurrent pieces of plant component industrial context information that are attached to one time unit, may correspond to a same plant component or may correspond to different plant components.

Hence, the trained generative AI model is also applicable on a plant component level, i.e. for individual plant components.

According to several examples of the present disclosure, the pieces of the industrial context information may be further indicative of at least one of:
- environmental data associated with the operational processes of the at least first industrial plant,
- environmental data associated with the plant component operational processes of the plurality of plant components,
- an industrial domain in which the at least first industrial plant is operated,
- alarms and events data associated with the at least first industrial plant,
- multimodal data about the plurality of plant components, and
- a topological context in which the at least first industrial plant is embedded.

It should be noted that environmental data may comprise a surrounding temperature, a surrounding humidity, a weather condition. For example, a temperature, humidity and weather of an area where the industrial plant is operating. Or a temperature and humidity of a factory in which the industrial plant is operating. The industrial domain may be a certain industrial field, for example the mining industry or the chemical industry. By multimodal data about the plurality of plant components it is meant, for example, i) textual or numerical features like a size of a component, a type of a processed material, operating temperatures, etc., ii) image series, iii) videos and/or iv) sounds. The topological context may indicate what components are connected to the at least first industrial plant and how/where they are connected.

Hence, due to the industrial context information covering such a broad range of different types of information, an extensive data base may be generated for training the generative AI model, and an even further improved trained generative AI model may be obtained due to the industrial context information covering such great variety of different types of information in great detail.

According to several examples of the present disclosure, the training may comprise performing the training in a self-supervised way by using at least one of the following tasks: multivariate forecasting for the sequence of context tokens and introduction of perturbation in the sequence of context tokens.

Hence, training the generative AI model in an efficient way is achieved.

According to several examples of the present disclosure, the finetuning may comprise:
- finetuning the trained generative AI model using finetuning training data, wherein the finetuning training data are associated with operational processes of the second industrial plant;
- wherein the forecasting may comprise forecasting by use of the finetuned trained generative AI model.

Hence, application of the trained generative AI model on the second industrial plant is further improved.

According to several examples of the present disclosure, the finetuning may comprise finetuning the trained generative AI model for at least one of:
- application on the second industrial plant to be operated in a certain type of industry,
- application on the second industrial plant to perform a certain process, and
- application on the second industrial plant to be operated in a certain climate region.

A certain climate region may comprise, for example, that the environmental temperature and the environmental humidity are in a certain range.

Hence, application of the trained generative AI model on the second industrial plant is further improved.

According to several examples of the present disclosure, the finetuning training data may comprise time series finetuning data and finetuning context information associated therewith, wherein the time series finetuning data and the finetuning context information may be associated with operational processes of the second industrial plant and/or with operational processes of plant components of the second industrial plant. According to several examples of the present disclosure, the time series finetuning data may be specific for an industrial context domain that is associated with the second industrial plant. According to several examples of the present disclosure, the context information may be specific for the industrial context domain.

Hence, application of the trained generative AI model on the second industrial plant is further improved.

According to several examples of the present disclosure, the time series data and/or the time series finetuning data may comprise at least one of the following three types of training data: historical data from real operational processes, synthetic data from synthetic operational processes, and synthetic data from historical data. The synthetic data from historical data may be synthesized via manipulation of the data, for example, by adding noise.

Hence, application of the trained generative AI model on the second industrial plant is further improved.

According to several examples of the present disclosure, the forecasting may comprise obtaining probabilistic forecasts for the operational behaviour of the second industrial plant by sampling multiple forecasted future trajectories.

Hence, a reliability of the forecasting is increased.

According to several examples of the present disclosure, the loss function may be a cross entropy loss function. In general, a suitable loss function shall be selected either for classification, for example cross entropy, or for regression, for example root mean square error. The time units may comprise time points and/or time periods. The industrial context information may be sparse industrial context information and the sequence of context tokens may be obtained based on attaching the time units with the sparse industrial context information.

Hence, a quality of the results of the training is improved due to the loss function being a cross entropy loss function. Further, a finer and more specific division of a time series or time series data into single time units is achieved due to the time units comprising both, time periods and time points.

According to a second aspect, there is provided a data processing apparatus. The data processing apparatus comprises one or more processors being configured to carry out the method of the first aspect.

The data processing apparatus according to the second aspect is advantageous in that it may participate in enabling for finetuning a generative AI model for application on a certain industrial plant in an efficient, reliable and less time-consuming way. It may further participate in enabling for zero-shot prompting for prediction or forecasting.

In more detail, the trained generative AI model may be understood to be a foundation model for time series with contexts in industrial applications. An important benefit of such foundation models lies in them being foundation models, i.e., trained on large time series data sets, which allow for zero-shot prompting for prediction or forecasting. Hence, foundation models would only require very little input data, i.e. input time series data sequence "with contexts" for example, in order to thereon-based kick-start, for example for a newly installed industrial plant, and to predict into the future for such newly installed industrial plant with a pretty-good and better-than-nothing multimodal, like time series and topology for example, model. Confidentiality improvement can be made by sampling multiple future trajectories in order to thus obtain probabilistic forecast distributions, along with corridors of uncertainties for example. Being based on language model architecture, the trained generative AI model can be expected to reveal similar next-token-prediction capabilities, similarly impressive to language models and their next-word-prediction capabilities. Expanding the state-of-the-art of pure time-series forecasting, thanks to the here-disclosed combination with industrial context information, the trained generative AI model can be expected to be a strong foundation for providing reasonably-well quick outputs, particularly where otherwise training would require large resource efforts, both with regard to time, for training a dedicated model, and cost, for compute and expertise, and also with regard to data. As said, once the trained generative AI model is available, it can be used as a model to generate using only very little input data already pretty good forecasts.

Moreover, there is enabled benefit for an operator. Regarding greenfield topologies and a "greenfield industrial plant", from only one week of data recorded for example, thanks to "foundation model knowledge" and zero-shot capability, after finetuning the trained generative AI model, i.e. after finetuning the certain foundation model with this recorded one-week-data, one can already get quite reasonable predictions for operational processes of the "greenfield industrial plant", and no specific model could have been trained earlier or better by using one week of recorded data only. Hence, the trained generative AI model could be very valuable particularly in situations where without much delay a time-series-prediction-model is required; for whichsoever use case, no matter if pattern analysis or anomaly detection or running mode classification. Regarding brownfield topologies and a "brownfield industrial plant", the trained generative AI model may lose the reliability in comparison to a model trained only on the certain "brownfield industrial plant", but the trained generative AI model would get more accurate compared to after one-week-only.

Furthermore, there is enabled also benefit for a dashboard user. A dashboard user, who works with dashboards that are based on algorithms observing or monitoring processes in operations, which are based on time series data, and if the dashboard user has AI/ML models or algorithms to analyze this time series data, the dashboard user will be able to faster set up dashboards, using the trained generative AI model.

In addition, when urgent predictions are needed for one or more operational processes of an industrial plant, and/or when no dedicated model is available or affordable for an industrial plant, then the trained generative AI model is very valuable, and reliability can be increased by sampling several inference runs and thus obtaining a probabilistic forecast distribution.

According to a third aspect, there is provided a data processing system. The data processing system comprising a data processing apparatus of the second aspect. Additionally or alternatively, the data processing system comprises means for carrying out the method of the first aspect.

The data processing system according to the third aspect is advantageous in that it may participate in enabling for finetuning a generative AI model for application on a certain industrial plant in an efficient, reliable and less time-consuming way. It may further participate in enabling for zero-shot prompting for prediction or forecasting.

In more detail, the trained generative AI model may be understood to be a foundation model for time series with contexts in industrial applications. An important benefit of such foundation models lies in them being foundation models, i.e., trained on large time series data sets, which allow for zero-shot prompting for prediction or forecasting. Hence, foundation models would only require very little input data, i.e. input time series data sequence "with contexts" for example, in order to thereon-based kick-start, for example for a newly installed industrial plant, and to predict into the future for such newly installed industrial plant with a pretty-good and better-than-nothing multimodal, like time series and topology for example, model. Confidentiality improvement can be made by sampling multiple future trajectories in order to thus obtain probabilistic forecast distributions, along with corridors of uncertainties for example. Being based on language model architecture, the trained generative AI model can be expected to reveal similar next-token-prediction capabilities, similarly impressive to language models and their next-word-prediction capabilities. Expanding the state-of-the-art of pure time-series forecasting, thanks to the here-disclosed combination with industrial context information, the trained generative AI model can be expected to be a strong foundation for providing reasonably-well quick outputs, particularly where otherwise training would require large resource efforts, both with regard to time, for training a dedicated model, and cost, for compute and expertise, and also with regard to data. As said, once the trained generative AI model is available, it can be used as a model to generate using only very little input data already pretty good forecasts.

Moreover, there is enabled benefit for an operator. Regarding greenfield topologies and a "greenfield industrial plant", from only one week of data recorded for example, thanks to "foundation model knowledge" and zero-shot capability, after finetuning the trained generative AI model, i.e. after finetuning the certain foundation model with this recorded one-week-data, one can already get quite reasonable predictions for operational processes of the "greenfield industrial plant", and no specific model could have been trained earlier or better by using one week of recorded data only. Hence, the trained generative AI model could be very valuable particularly in situations where without much delay a time-series-prediction-model is required; for whichsoever use case, no matter if pattern analysis or anomaly detection or running mode classification. Regarding brownfield topologies and a "brownfield industrial plant", the trained generative AI model may lose the reliability in comparison to a model trained only on the certain "brownfield industrial plant", but the trained generative AI model would get more accurate compared to after one-week-only.

Furthermore, there is enabled also benefit for a dashboard user. A dashboard user, who works with dashboards that are based on algorithms observing or monitoring processes in operations, which are based on time series data, and if the dashboard user has AI/ML models or algorithms to analyze this time series data, the dashboard user will be able to faster set up dashboards, using the trained generative AI model.

In addition, when urgent predictions are needed for one or more operational processes of an industrial plant, and/or when no dedicated model is available or affordable for an industrial plant, then the trained generative AI model is very valuable, and reliability can be increased by sampling several inference runs and thus obtaining a probabilistic forecast distribution.

According to a fourth aspect, there is provided an industrial plant comprising a data processing apparatus of the second aspect and/or a data processing system of the third aspect.

By "industrial plant", according to several examples, it may be meant an industrial plant, autonomous industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling for finetuning a generative AI model for application on a certain industrial plant in an efficient, reliable and less time-consuming way. It may further participate in enabling for zero-shot prompting for prediction or forecasting.

In more detail, the trained generative AI model may be understood to be a foundation model for time series with contexts in industrial applications. An important benefit of such foundation models lies in them being foundation models, i.e., trained on large time series data sets, which allow for zero-shot prompting for prediction or forecasting. Hence, foundation models would only require very little input data, i.e. input time series data sequence "with contexts" for example, in order to thereon-based kick-start, for example for a newly installed industrial plant, and to predict into the future for such newly installed industrial plant with a pretty-good and better-than-nothing multimodal, like time series and topology for example, model. Confidentiality improvement can be made by sampling multiple future trajectories in order to thus obtain probabilistic forecast distributions, along with corridors of uncertainties for example. Being based on language model architecture, the trained generative AI model can be expected to reveal similar next-token-prediction capabilities, similarly impressive to language models and their next-word-prediction capabilities. Expanding the state-of-the-art of pure time-series forecasting, thanks to the here-disclosed combination with industrial context information, the trained generative AI model can be expected to be a strong foundation for providing reasonably-well quick outputs, particularly where otherwise training would require large resource efforts, both with regard to time, for training a dedicated model, and cost, for compute and expertise, and also with regard to data. As said, once the trained generative AI model is available, it can be used as a model to generate using only very little input data already pretty good forecasts.

Moreover, there is enabled benefit for an operator. Regarding greenfield topologies and a "greenfield industrial plant", from only one week of data recorded for example, thanks to "foundation model knowledge" and zero-shot capability, after finetuning the trained generative AI model, i.e. after finetuning the certain foundation model with this recorded one-week-data, one can already get quite reasonable predictions for operational processes of the "greenfield industrial plant", and no specific model could have been trained earlier or better by using one week of recorded data only. Hence, the trained generative AI model could be very valuable particularly in situations where without much delay a time-series-prediction-model is required; for whichsoever use case, no matter if pattern analysis or anomaly detection or running mode classification. Regarding brownfield topologies and a "brownfield industrial plant", the trained generative AI model may lose the reliability in comparison to a model trained only on the certain "brownfield industrial plant", but the trained generative AI model would get more accurate compared to after one-week-only.

Furthermore, there is enabled also benefit for a dashboard user. A dashboard user, who works with dashboards that are based on algorithms observing or monitoring processes in operations, which are based on time series data, and if the dashboard user has AI/ML models or algorithms to analyze this time series data, the dashboard user will be able to faster set up dashboards, using the trained generative AI model.

In addition, when urgent predictions are needed for one or more operational processes of an industrial plant, and/or when no dedicated model is available or affordable for an industrial plant, then the trained generative AI model is very valuable, and reliability can be increased by sampling several inference runs and thus obtaining a probabilistic forecast distribution.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling for finetuning a generative AI model for application on a certain industrial plant in an efficient, reliable and less time-consuming way. It may further participate in enabling for zero-shot prompting for prediction or forecasting.

In more detail, the trained generative AI model may be understood to be a foundation model for time series with contexts in industrial applications. An important benefit of such foundation models lies in them being foundation models, i.e., trained on large time series data sets, which allow for zero-shot prompting for prediction or forecasting. Hence, foundation models would only require very little input data, i.e. input time series data sequence "with contexts" for example, in order to thereon-based kick-start, for example for a newly installed industrial plant, and to predict into the future for such newly installed industrial plant with a pretty-good and better-than-nothing multimodal, like time series and topology for example, model. Confidentiality improvement can be made by sampling multiple future trajectories in order to thus obtain probabilistic forecast distributions, along with corridors of uncertainties for example. Being based on language model architecture, the trained generative AI model can be expected to reveal similar next-token-prediction capabilities, similarly impressive to language models and their next-word-prediction capabilities. Expanding the state-of-the-art of pure time-series forecasting, thanks to the here-disclosed combination with industrial context information, the trained generative AI model can be expected to be a strong foundation for providing reasonably-well quick outputs, particularly where otherwise training would require large resource efforts, both with regard to time, for training a dedicated model, and cost, for compute and expertise, and also with regard to data. As said, once the trained generative AI model is available, it can be used as a model to generate using only very little input data already pretty good forecasts.

Moreover, there is enabled benefit for an operator. Regarding greenfield topologies and a "greenfield industrial plant", from only one week of data recorded for example, thanks to "foundation model knowledge" and zero-shot capability, after finetuning the trained generative AI model, i.e. after finetuning the certain foundation model with this recorded one-week-data, one can already get quite reasonable predictions for operational processes of the "greenfield industrial plant", and no specific model could have been trained earlier or better by using one week of recorded data only. Hence, the trained generative AI model could be very valuable particularly in situations where without much delay a time-series-prediction-model is required; for whichsoever use case, no matter if pattern analysis or anomaly detection or running mode classification. Regarding brownfield topologies and a "brownfield industrial plant", the trained generative AI model may lose the reliability in comparison to a model trained only on the certain "brownfield industrial plant", but the trained generative AI model would get more accurate compared to after one-week-only.

Furthermore, there is enabled also benefit for a dashboard user. A dashboard user, who works with dashboards that are based on algorithms observing or monitoring processes in operations, which are based on time series data, and if the dashboard user has AI/ML models or algorithms to analyze this time series data, the dashboard user will be able to faster set up dashboards, using the trained generative AI model.

In addition, when urgent predictions are needed for one or more operational processes of an industrial plant, and/or when no dedicated model is available or affordable for an industrial plant, then the trained generative AI model is very valuable, and reliability can be increased by sampling several inference runs and thus obtaining a probabilistic forecast distribution.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling for finetuning a generative AI model for application on a certain industrial plant in an efficient, reliable and less time-consuming way. It may further participate in enabling for zero-shot prompting for prediction or forecasting.

In more detail, the trained generative AI model may be understood to be a foundation model for time series with contexts in industrial applications. An important benefit of such foundation models lies in them being foundation models, i.e., trained on large time series data sets, which allow for zero-shot prompting for prediction or forecasting. Hence, foundation models would only require very little input data, i.e. input time series data sequence "with contexts" for example, in order to thereon-based kick-start, for example for a newly installed industrial plant, and to predict into the future for such newly installed industrial plant with a pretty-good and better-than-nothing multimodal, like time series and topology for example, model. Confidentiality improvement can be made by sampling multiple future trajectories in order to thus obtain probabilistic forecast distributions, along with corridors of uncertainties for example. Being based on language model architecture, the trained generative AI model can be expected to reveal similar next-token-prediction capabilities, similarly impressive to language models and their next-word-prediction capabilities. Expanding the state-of-the-art of pure time-series forecasting, thanks to the here-disclosed combination with industrial context information, the trained generative AI model can be expected to be a strong foundation for providing reasonably-well quick outputs, particularly where otherwise training would require large resource efforts, both with regard to time, for training a dedicated model, and cost, for compute and expertise, and also with regard to data. As said, once the trained generative AI model is available, it can be used as a model to generate using only very little input data already pretty good forecasts.

Moreover, there is enabled benefit for an operator. Regarding greenfield topologies and a "greenfield industrial plant", from only one week of data recorded for example, thanks to "foundation model knowledge" and zero-shot capability, after finetuning the trained generative AI model, i.e. after finetuning the certain foundation model with this recorded one-week-data, one can already get quite reasonable predictions for operational processes of the "greenfield industrial plant", and no specific model could have been trained earlier or better by using one week of recorded data only. Hence, the trained generative AI model could be very valuable particularly in situations where without much delay a time-series-prediction-model is required; for whichsoever use case, no matter if pattern analysis or anomaly detection or running mode classification. Regarding brownfield topologies and a "brownfield industrial plant", the trained generative AI model may lose the reliability in comparison to a model trained only on the certain "brownfield industrial plant", but the trained generative AI model would get more accurate compared to after one-week-only.

Furthermore, there is enabled also benefit for a dashboard user. A dashboard user, who works with dashboards that are based on algorithms observing or monitoring processes in operations, which are based on time series data, and if the dashboard user has AI/ML models or algorithms to analyze this time series data, the dashboard user will be able to faster set up dashboards, using the trained generative AI model.

In addition, when urgent predictions are needed for one or more operational processes of an industrial plant, and/or when no dedicated model is available or affordable for an industrial plant, then the trained generative AI model is very valuable, and reliability can be increased by sampling several inference runs and thus obtaining a probabilistic forecast distribution.

According to a seventh aspect, there is provided a use of at least one of the trained generative AI model according to the first aspect, a data processing apparatus of the second aspect, a data processing system of the third aspect, an industrial plant of the fourth aspect, a computer-readable medium of the fifth aspect, and a computer program product of the sixth aspect.

The use according to the seventh aspect is advantageous in that it may participate in enabling for finetuning a generative AI model for application on a certain industrial plant in an efficient, reliable and less time-consuming way. It may further participate in enabling for zero-shot prompting for prediction or forecasting.

In more detail, the trained generative AI model may be understood to be a foundation model for time series with contexts in industrial applications. An important benefit of such foundation models lies in them being foundation models, i.e., trained on large time series data sets, which allow for zero-shot prompting for prediction or forecasting. Hence, foundation models would only require very little input data, i.e. input time series data sequence "with contexts" for example, in order to thereon-based kick-start, for example for a newly installed industrial plant, and to predict into the future for such newly installed industrial plant with a pretty-good and better-than-nothing multimodal, like time series and topology for example, model. Confidentiality improvement can be made by sampling multiple future trajectories in order to thus obtain probabilistic forecast distributions, along with corridors of uncertainties for example. Being based on language model architecture, the trained generative AI model can be expected to reveal similar next-token-prediction capabilities, similarly impressive to language models and their next-word-prediction capabilities. Expanding the state-of-the-art of pure time-series forecasting, thanks to the here-disclosed combination with industrial context information, the trained generative AI model can be expected to be a strong foundation for providing reasonably-well quick outputs, particularly where otherwise training would require large resource efforts, both with regard to time, for training a dedicated model, and cost, for compute and expertise, and also with regard to data. As said, once the trained generative AI model is available, it can be used as a model to generate using only very little input data already pretty good forecasts.

Moreover, there is enabled benefit for an operator. Regarding greenfield topologies and a "greenfield industrial plant", from only one week of data recorded for example, thanks to "foundation model knowledge" and zero-shot capability, after finetuning the trained generative AI model, i.e. after finetuning the certain foundation model with this recorded one-week-data, one can already get quite reasonable predictions for operational processes of the "greenfield industrial plant", and no specific model could have been trained earlier or better by using one week of recorded data only. Hence, the trained generative AI model could be very valuable particularly in situations where without much delay a time-series-prediction-model is required; for whichsoever use case, no matter if pattern analysis or anomaly detection or running mode classification. Regarding brownfield topologies and a "brownfield industrial plant", the trained generative AI model may lose the reliability in comparison to a model trained only on the certain "brownfield industrial plant", but the trained generative AI model would get more accurate compared to after one-week-only.

Furthermore, there is enabled also benefit for a dashboard user. A dashboard user, who works with dashboards that are based on algorithms observing or monitoring processes in operations, which are based on time series data, and if the dashboard user has AI/ML models or algorithms to analyze this time series data, the dashboard user will be able to faster set up dashboards, using the trained generative AI model.

In addition, when urgent predictions are needed for one or more operational processes of an industrial plant, and/or when no dedicated model is available or affordable for an industrial plant, then the trained generative AI model is very valuable, and reliability can be increased by sampling several inference runs and thus obtaining a probabilistic forecast distribution.

According to a several examples of the present disclosure, in more detail, the trained generative AI model according to the first aspect may be used in several different application areas. In general, as already outlined with reference to the method according to the first aspect, the trained generative AI model is used for at least one of: i) finetuning the trained generative AI model for a second industrial plant different from the first industrial plant and ii) forecasting a further progression of an operational process for the second industrial plant. In addition and/or in more detail, It should be noted that the trained generative AI model may be used for at least one of efficient anomaly detection, quality forecasting and enabling data analysis in greenfield plants.

Regarding the efficient anomaly detection, detecting faults such as leakages, for example, can be more robust with video or sound data let alone with time series data, wherein, for example, pump failure detection with sound and time series is sometimes more efficient. For example, a certain failure like the mentioned pump failure may lead to at least part of the industrial plant (at which the certain failure occurred) making an unusual sound or noise. Depending on the type of failure a different sound or noise may occur. Hence, based on the different sound or noise and the corresponding time series data the type of failure may be guessed, proposed or determined more efficient. Similar, a certain failure like the mentioned pump failure may, for example, lead to at least part of the industrial plant (at which the certain failure occurred) making an unusual movement or vibration or to a visible refrigerant or oil leaking. Depending on the type of failure a different movement, vibration or leakage may occur. Hence, based on the different movement, vibration or leakage and the corresponding time series data the type of failure may be guessed, proposed or determined more efficient.

According to several examples of the present disclosure, the industrial context information may comprise at least one of video data, image data and sound data. For example, the video data, image data and/or sound data may be associated with one or more plant components of the first industrial plant and/or (for finetuning for example) of the second industrial plant. Additionally or alternatively, the video data, image data and/or sound data may be associated with one or more operational processes of the first industrial plant and/or (for finetuning for example) of the second industrial plant. For example, the video data, image data and/or sound data may be associated with one or more starting materials processed by the first and/or second industrial plant, with one or more intermediate (manufacturing) products produced by the first and/or second industrial plant and/or with one or more end (manufacturing) products produced by the first and/or second industrial plant.

Hence, for example, a context token may represent a time unit to which pieces of video data and/or image data and/or sound data are attached. Thus, a sequence of context tokens may comprise a sequence of time units to which respective pieces of video data and/or image data and/or sound data are attached.

The use of the trained generative AI model may then comprise detecting an anomaly in an operational process and/or in operational data of the second industrial plant, preferably based on the sequence of time units to which respective pieces of video data and/or image data and/or sound data are attached.

Regarding the quality forecasting, forecasting quality of, for example, an intermediate manufacturing product can be much better with the video, or subsequent images of the product together with time series.

Hence, according to several examples of the present disclosure, the forecasting of the operational process for the second industrial plant may comprise forecasting a quality of an intermediate manufacturing product or end manufacturing product that is (to be) manufactured at the second industrial plant.

Regarding the enabling of data analysis in greenfield plants, for a greenfield plant, data analysis or application of ML models from the start is very difficult. Thus, having the trained generative AI model, optionally with some initial finetuning, can help to provide several uses or benefits.

Hence, according to several examples of the present disclosure, the second industrial plant may be a greenfield plant.

Optional features of the first aspect may form part of any of the second to seventh aspects, mutatis mutandis.

The computer-readable medium of the fifth aspect may have stored thereon the computer program product of the sixth aspect.

The term "obtaining", as used herein, may comprise, for example, receiving from another system, apparatus, (AI/ML) model or process; receiving via an interaction with a user; loading or retrieving from storage or memory; measuring or capturing using sensors or other data acquisition apparatuses, receiving or acquiring as a result from one or more data processing steps.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates an example for a tokenization procedure according to several examples of the present disclosure;
- Figure 2 illustrates a training phase and an inference phase of the foundation model according to several examples of the present disclosure;
- Figure 3 illustrates a flowchart indicative of a method according to several examples of the present disclosure;
- Figure 4 illustrates a block diagram schematically showing a data processing apparatus according to several examples of the present disclosure; and
- Figure 5 schematically illustrates how to train and use the foundation model according to several examples of the present disclosure.

### DETAILED DESCRIPTION

According to several examples of the present disclosure, there is disclosed a method (as well as a data processing apparatus and a data processing system for example) for obtaining, for industrial applications, foundation model functionalities for time series data of operational processes with industrial context information.

It shall be noted that the term "foundation model functionalities" is meant to refer to functionalities of a ML-based model. In more detail, it is meant that a ML-based model has a broad knowledge and understanding of the things-of-interest, which is out-of-the-box generally pretty-well applicable or usable without requiring any additional further work like further dedicated re-source-consuming data-driven training, calibration, tuning, or optimization. Said in other words, the ML-based model having the foundation model functionalities may have a broad knowledge and understanding in, for example, starting up and/or optimizing operational processes of one or more certain industrial plants being the things-of-interest. The one or more industrial plant may be understood to represent, for example, one or more industrial plants used in a certain industrial field like in the mining industry or in the chemical industry. Then, in case an industrial plant is newly incorporated or embedded in such certain industrial field for example, the ML-based model having the foundation model functionalities is already pretty-well applicable, i.e. out-of-the-box pretty-well applicable on the newly incorporated, embedded or installed industrial plant.

Hence, foundation models would only require very little input data, like an input time series data sequence for example, in order to thereon-based kick-start, for example for a newly installed industrial plant, and to enable various data-driven applications for the newly installed industrial plant, such as anomaly detection, forecasting, and data labelling, with a pretty-good and better-than-nothing multimodal, like time series and topology for example, model.

Specifically, according to several examples of the present disclosure, it is disclosed a method and data processing apparatus for the abstract representation, i.e. the encoding, of time series data together with industrial context information. Using the time series data together with the industrial context information, it is enabled to pre-train a foundation model by use of historical operational data and/or future available operational data. The foundation model can, as one of its biggest benefits, then be used (1) for low-effort finetuning and/or (2) for prompting with zero-shot forecasting and prediction capabilities.

This means, that as a benefit of having a such foundation model, a user of the foundation model would, both for finetuning or for direct prompting, only require very little training or input data. For example, the user may require only a short time series data sequence and some industrial context information, i.e. some pieces of industrial context information. For example, such as what plant component of an industrial plant the short time series data sequence is from, or what industry (or field of industry) is concerned, or what the current temperature is. The user would only require the very little training or input data in order to thereon-based directly pretty-confidently predict into the future. Additionally or alternatively, respectively, enable various data-driven applications, such as anomaly detection, forecasting, and data labelling. It shall be noted that according to several examples of the present disclosure, an industrial plant may comprise a plurality of plant components, and time series data may comprise plant component time series data of plant component operational processes associated with the plurality of plant components. It shall further be noted that according to several examples of the present disclosure, the plant component operational processes may be comprised by (pieces of) operational processes of the industrial plant, and wherein pieces of the plant component time series data may correspond to one or more respective plant components of the plurality of plant components. Industrial context information or pieces of industrial context information (as outlined below in more detail) may comprise plant component industrial context information that are associated with the plant component operational processes.

With "pretty-confidently predict into the future", it is meant that instead of having to train an entirely new model (an entirely new ML-based model) from scratch, which may take several weeks, an industrial plant owner or operator for example can use the foundation model to kick-start, for example for a newly installed industrial plant, directly with a "better-than-nothing" pretty-capable model, which has seen a large amount of time series data in combination with industrial context information. It should be noted that this is opposed to having a time series only (without context) foundation model, where one could not rely on obtaining reasonable context-relevant output, as the time series of the plant component 'X' could be very similar to e.g. the body vitality parameter time series or to e.g. the financial stock value process, if no additional context is given. Hence, since contexts are considered, and since the foundation model is trained for time series with contexts, one can actually rely on the predictions made by the foundation model according to several examples of the present disclosure (at least better-than nothing), because all of these predictions are at least somehow industrial-plant-relevant due to the contexts.

Note that the "pretty-confident prediction into the future" could be made more confident by standard methods that are used for standard text-based large language models (LLMs) for word/sentence-prediction, too. This could be as simple as asking the foundation model to predict into the future for ten times with the same input and then averaging on the predictions, i.e., multiple predicted trajectories are sampled to obtain a predictive distribution, with a most-likely trajectory and a corridor of uncertainty. Or the foundation model could be asked by a user to provide additional information to decrease the uncertainty, e.g., by exclusion of some behavior of the industrial plant (or one or more industrial plant components) the foundation model is applied on.

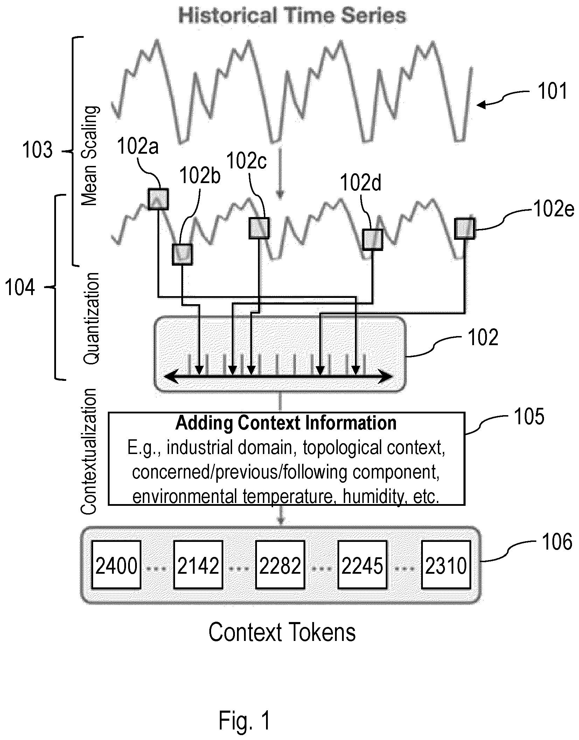

According to several examples of the present disclosure and with reference to Figure 1, which shows a high-level visualization of a tokenization procedure according to several examples of the present disclosure, a training of this foundation model may work as follows (i.e. implementation details may be given in the following):
A model that underlies the foundation model is based on a language model architecture. In the tokenization step, which is a preparatory step for training the foundation model, a time series or time series data 101 are transformed into a sequence of 'preliminary tokens' 102 (which is illustrated to be split into and then comprise the preliminary tokens 102a, 102b, 102c, 102d and 102e for example), for example, optionally after scaling, mean scaling 103 and/or quantization 104 of the time series data 101. For example, moving time windows or a similar approach can be used. Each of these 'preliminary tokens' 102a to 102e gets attached an additional context vector or context tag, which contains additional information, like industrial context information 105 for example. Such additional information may, for example, be about one or more plant components (of an industrial plant of interest) from which (plant component) time series data were recorded or obtained that are included in the time series data 101. Additionally or alternatively, the additional information or industrial context information may be part of an overall plant topology (i.e. the plant topology of the industrial plant of interest) and/or may even be indicative of environmental conditions, like of weather or temperature information, video recordings, with time-stamps, so they can be aligned to the time series data, etc. As a result the 'final context tokens' 106 are obtained. Further, the resulting embeddings may then be put together in a joint embedding space for the ML model algorithm to learn on a specific task.

It shall be noted that the proposed tokenization schema or procedure as illustrated according to Figure 1 goes beyond the state of the art, since there are integrated additional context information along or aligned with respective time series data. Thus, it is obtained based thereon a reasonable industrial time series foundation model.

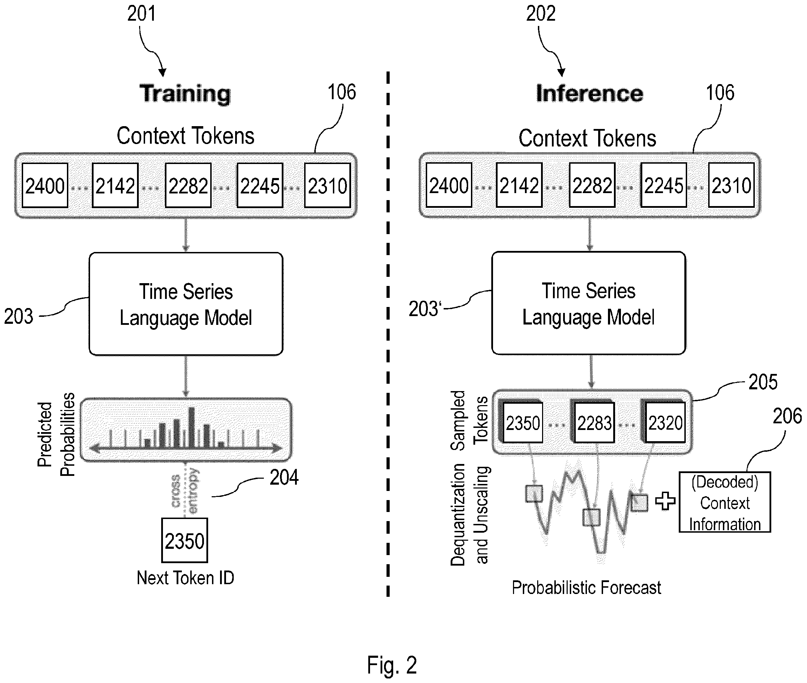

Referring now to Figure 2, which illustrates a training phase 201 and an inference phase 202 of the foundation model according to several examples of the present disclosure, using this tokenization schema or tokenization procedure as illustrated according to Figure 1, a (time series) language model 203 can be trained on thus-obtained sequences of tokens 106, for example such sequence of tokens 106 as illustrated in Figure 1. The training may comprise to feed the token sequences 106 into the language model 203 and to train the language model 203 using, for example, masking techniques (i.e., masking a respectively next token and training to predict this respectively next token) along with a suitable loss function. For example, the loss function may be a cross-entropy loss 204. The language model 203 may either be an encoder-decoder or a decoder-only model. Once the language model 203 is trained, the language model 203' may be understood to represent the foundation model.

For a pre-training of the foundation model, i.e. of the language model 203, there are transformer architectures for time series and also methods for probabilistic forecasting, so using such architecture for training on the tokenized samples 106 with a neural network can be used. Moreover, the pre-training can be done in a self-supervised way using tasks such as a multivariate forecasting and/or introducing perturbation in the data. For example, introducing perturbation in the data may comprise an interpolation of missing values, for example by randomly or strategically masking certain time series points. Also, introducing perturbation in the data may comprise an outlier interpolation by identifying outliers and removing or masking them. Moreover, also make the multimodal time series model work with fewer modalities, for example when data from some of the modalities is missing, it may be strategically or randomly introduced a set of zeroes to some of the modalities. For example, it can be introduced zeroes to the video data in some of the samples, indicating that data is missing from video modality, and in some other samples both video and sound data can be put to zeroes. This will help the model learn from single or few modalities and in turn will be able to provide inference when some input data is missing.

For a finetuning of the foundation model, i.e. of the language model 203', the pre-trained foundation model can be further finetuned on downstream tasks such as forecasting, multiclass classification, anomaly detection, etc.

According to several examples of the present disclosure, regarding an implementation, the training of the foundation model may preferably be at least "Quantization Aware Training", and may hold both the quantized and non-quantized states of weights, so performance may be increased. Further, a forward-pass through the ML/AI model (for inference) may make use of the quantized version, whereas backpropagation may use the unquantized version, to increase performance.

Once trained, next, i.e., during the inference phase 202, i.e., while usage or application of the foundation model, probabilistic forecasts may be obtained by sampling multiple future trajectories given the historical context. More precisely, tokens are sampled 205 autoregressively from the foundation model and are mapped back to numerical values representing time series and contexts.

As mentioned above, multiple trajectories can be sampled to obtain a more reliable predictive distribution. It shall be noted that a simple consistency check can be obtained by comparing the (decoded) output context information 206 with the initial (not-yet encoded) input context information. For example, as simple as, if the temperature was 25°C at the point/period of time of the input time series 101, and it is decoded to suddenly be 10°C only in the "predicted output", then this obviously is an error.

It shall be noted with further regard on an implementation of training and data requirements, that there are (relatively) large amounts of data needed to train or pre-train the language model 203, so it can reasonably comprehensively serve as a foundation model. This means that, for example, data from all sorts of plant components in plant topologies, for example distillation-columns, tanks, reactors, level-transmitters, etc., and under all sorts of environmental conditions, like warm, cold, humid, dry, etc., are needed in, preferably almost, all kinds of combinations.

The more comprehensive the language model 203' knows the "world", i.e. the more data about all sorts of conditions and their variations and in all combinations are available to the language model 203' or were trained to the language model 203', the better the language model 203' will then be able to do inference in a future usage situation, as the language model 203' has learned how the "world" works.

It shall further be noted that the large amounts of data may be both gathered or recorded from real plants, as well as obtained as synthetic data, for example generated by using Gaussian processes, etc.

Furthermore, according to several examples of the present disclosure, distributed data collection and training is possible, too. In more detail, as the task to pre-train the language model 203 can be done in a self-supervised way, it can be used the data from different sections of an industrial plant of interest or of different industrial plants of interest from a same customer for example to pre-train the language model 203 in a distributed way and merge the weights. The same can be done for finetuning especially for the case of forecasting and anomaly detection, where the forecasted value is usually available after a certain time and such samples can be easily collected in an online fashion. For anomaly detection, the time series can be treated as normal until a certain alarm or human intervention is detected, after which a feedback from an operator may be requested to get the data labelled. These approaches can help overcome the problem of data availability.

The thus obtained foundation model, i.e. the trained language model 203', can respectively be finetuned, for example, for Pulp & Paper industry (versus Mining industry for example), or for northern climates (versus southern climates for example), or for chemical process industrial plants along with specific plant components and alarms etc. (versus Oil & Gas industrial plants with other circumstances for example).

Just as for the prominent text-based LLMs, the potential and reliability of these foundation models can be increased by finetuning on domain-specific time series data along with domain-specific context information.

It shall be noted that generally, alignment of the multimodal context information data to the time series data is most likely or frequently done by means of suitable time stamps.

According to several examples of the present disclosure, one or more of the following data sources may be used or considered to obtain time series data and/or to obtain industrial context information:
- sensor data;
- a tank level, reaction times, educt and/or product volumes per time, educt and/or product amounts per time, etc.;
- alarms and/or events;
- manual logs;
- (operational) parameters and states or state changes (of the industrial plant and/or of plant components), and combinations thereof;
- weather data, like temperature data or humidity data for example;
- etc.

According to several examples of the present disclosure, industrial context information may comprise at least one of the following:
- a topology of an industrial plant, wherein the topology indicates which plant component is linked to which other plant component(s), and hence, which plant component's time series data drop or raise may affect which other plant component, etc.;
- industrial information models and/or industry or industrial field information models, like how time series data are related to each other or to an overall operational process of the industrial plant for example;
- etc.

According to several examples of the present disclosure, the foundation model as disclosed herein may be used, for example out-of-the-box, for direct usage for anything concerned with time series, for example for time-series-based anomaly detection, pattern analysis or drive running mode classification, or for maintenance due date calculation, etc.

It should be noted for reasons of understandability, that clearly dedicated models for analyzing data may also be used instead of the foundation model as disclosed herein, but these dedicated models do require large efforts and long times of training the dedicated solutions, as opposed to the foundation model approach as disclosed herein according to several examples of the present disclosure.

According to several examples of the present disclosure, the foundation model may be of benefit in different application areas.

For example, for efficient anomaly detection: detecting faults such as leakages can be more robust with video or sound data let alone with time series data, wherein pump failure detection with sound and time series is sometimes more efficient.

For example, for quality forecasting: forecasting quality of intermediate manufacturing product can be much better with the video, or subsequent images of the product together with time series

For example, for enabling data analysis in greenfield plants: for a greenfield plant data analysis or ML models from the start is very difficult, wherein having a pre-trained foundation model with some initial finetuning can help provide several use.

Hence, there are enabled many industrial use cases with efficient and more global use of datasets.

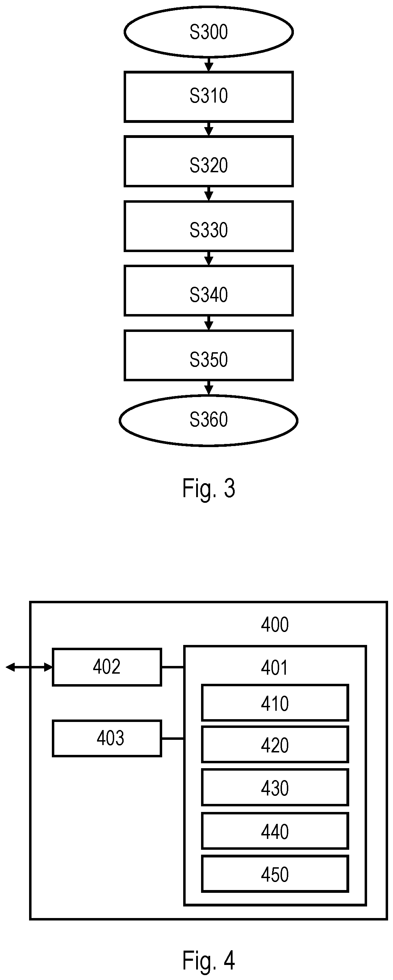

Referring now to Figure 3, Figure 3 illustrates a flowchart indicative of a method according to several examples of the present disclosure. The method is for obtaining, for industrial applications, foundation model functionalities for time series data of operational processes with industrial context information. The time series data may be such time series data 101 as illustrated with reference to Figure 1. The industrial context information may be such industrial context information 105 as illustrated with reference to Figure 1.

The method starts in S300.

In S310, the method comprises transforming the time series data of operational processes associated with at least a first industrial plant into a sequence of time units associated with respective pieces of the operational processes.

In S320, the method comprises attaching time units of the sequence of time units with the industrial context information, wherein pieces of the industrial context information are associated with the pieces of the operational processes and wherein the time units are attached with concurrent pieces of the industrial context information.

In S330, the method comprises obtaining a sequence of context tokens from the attaching, wherein one context token represents one time unit to which concurrent pieces of the industrial context information are attached. For example, the sequence of context tokens may be obtained by means of a tokenization method. The sequence of context tokens may be such sequence of context tokens 106 as illustrated with reference to Figures 1 and 2.

In S340, the method comprises training a generative AI model on the sequence of context tokens using a loss function. The generative AI model (that is untrained or that is in the pre-training) may be such language model 203 as illustrated with reference to Figure 2.

In S350, the method comprises using the trained generative AI model having the foundation model functionalities for at least one of: i) finetuning the trained generative AI model for a second industrial plant different from the first industrial plant and ii) forecasting a further progression of an operational process for the second industrial plant. The trained generative AI model may be such trained language model 203' as illustrated with reference to Figure 2.

The method ends in S360.

According to several examples of the present disclosure, the transforming in S310 may comprise transforming the time series data into the sequence of time units by mean scaling and/or quantizing the time series data to obtain the sequence of time units. An illustrative example for mean scaling and/or quantizing is shown in Figure 1.

According to several examples of the present disclosure, the attaching in S320 may comprise attaching each of the time units with a context vector that is related to the pieces of the industrial context information that are associated with the respective time unit. Context vectors are outlined above in more detail with reference to Figure 1.

According to several examples of the present disclosure, the pieces of the industrial context information may further be indicative of at least one of:
- environmental data associated with the operational processes of the at least first industrial plant,
- environmental data associated with the plant component operational processes of the plurality of plant components,
- an industrial domain in which the at least first industrial plant is operated,
- alarms and events data associated with the at least first industrial plant,
- multimodal data about the plurality of plant components, and
- a topological context in which the at least first industrial plant is embedded.

According to several examples of the present disclosure, the training in S340 may comprise performing the training in a self-supervised way by using at least one of the following tasks: multivariate forecasting for the sequence of context tokens and introduction of perturbation in the sequence of context tokens.

According to several examples of the present disclosure, the i) finetuning in S350 may comprise: finetuning the trained generative AI model using finetuning training data, wherein the finetuning training data are associated with operational processes of the second industrial plant; wherein the ii) forecasting in S350 may comprise forecasting by use of the finetuned trained generative AI model.

According to several examples of the present disclosure, the i) finetuning in S350 may comprise finetuning the trained generative AI model for at least one of:
- application on the second industrial plant to be operated in a certain type of industry,
- application on the second industrial plant to perform a certain process, and
- application on the second industrial plant to be operated in a certain climate region.

According to several examples of the present disclosure, the finetuning training data may comprise time series finetuning data and finetuning context information associated therewith, wherein the time series finetuning data and the finetuning context information may be associated with operational processes of the second industrial plant and/or with operational processes of plant components of the second industrial plant. According to several examples of the present disclosure, the time series finetuning data may be specific for an industrial context domain that is associated with the second industrial plant. According to several examples of the present disclosure, the context information may be specific for the industrial context domain.

According to several examples of the present disclosure, the time series data and/or the time series finetuning data may comprise at least one of the following three types of training data: historical data from real operational processes, synthetic data from synthetic operational processes, and synthetic data from historical data. The synthetic data from historical data may be synthesized via manipulation of the data, for example, by adding noise.

According to several examples of the present disclosure, the ii) forecasting in S350 may comprise obtaining probabilistic forecasts for the operational behaviour of the second industrial plant by sampling multiple forecasted future trajectories.

According to several examples of the present disclosure, the time units may comprise time points and/or time periods.

Referring now to Figure 4, Figure 4 shows a block diagram schematically illustrating a data processing apparatus 400 according to several examples of the present disclosure. In particular, according to several examples of the present disclosure, there is provided a data processing apparatus 400 for obtaining, for industrial applications, foundation model functionalities for time series data of operational processes with industrial context information. The data processing apparatus 400 comprises one or more processors 401 being configured to carry out the method as indicated according to Figures 1 and 2 and/or to carry out the method as outlined above with reference to Figure 3.

According to several examples of the present disclosure, the data processing apparatus 400 may comprise means to function as such language model 203 and/or such trained language model 203' as outlined above with reference to Figure 2.

In more detail, according to various examples, a data processing apparatus 400 being configured to carry out the method of Figure 3 may comprise a processing circuitry, a processing function, a processing means, a processing unit or a processor 401, which enables the data processing apparatus 400 to participate in obtaining, for industrial applications, foundation model functionalities for time series data of operational processes with industrial context information. The processor 401 may comprise one or more processing portions or functions, wherein the processing portions or functions may be provided as one or more physical or virtual entities. The data processing apparatus 400 may comprise one or more communication interfaces 402. The data processing apparatus 400 may further comprise a memory or memory unit 403 for storing data, programs and/or instructions to be executed by the processor. The memory 403 may be a memory internal to the data processing apparatus 400 or may be a memory external to the data processing apparatus 400, for example at a cloud server. The processor 401 may comprise one or more portions, which enable the data processing apparatus 400 to execute the method of Figure 3 for example. According to several examples of the present disclosure, a transforming portion 410 may be configured to perform such transforming according to S310 of Figure 3, an attaching portion 420 may be configured to perform such attaching according to S320 of Figure 3, an obtaining portion 430 may be configured to perform such obtaining according to S330 of Figure 3, a training portion 440 may be configured to perform such training according to S340 of Figure 3, and a using portion 440 may be configured to perform such using according to S350 of Figure 3.

According to several examples of the present disclosure, the respective portions of the data processing apparatus 400 may also be understood as means for carrying out the certain function.

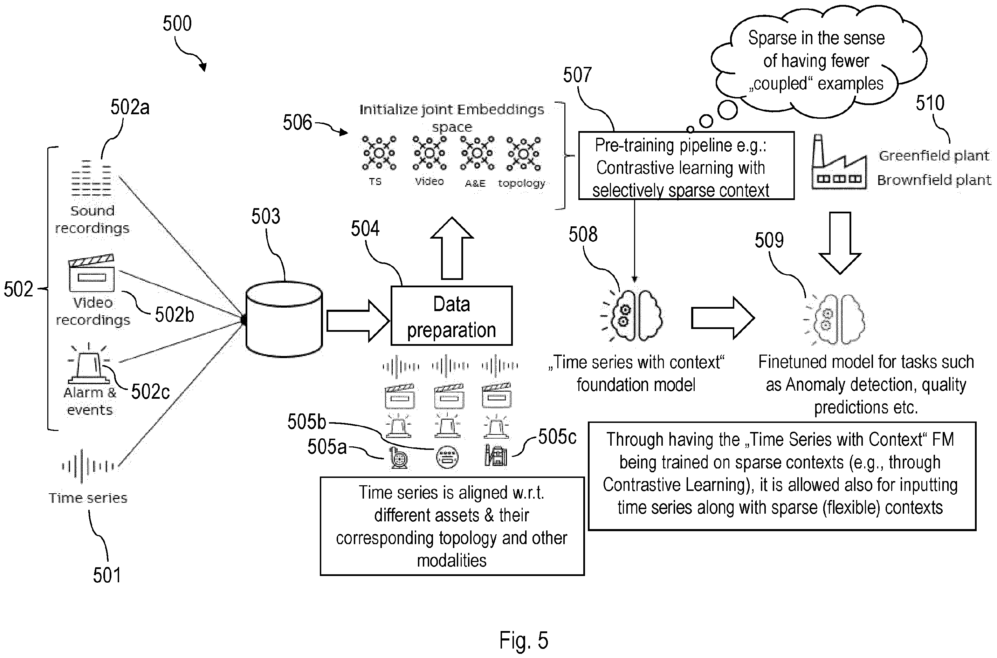

Referring now to Figure 5, Figure 5 schematically illustrates how to train and use the foundation model (i.e. how to train a generative AI model to obtain the desired foundation model) according to several examples of the present disclosure.

In view thereof, it shall be noted that according to several examples of the present disclosure, time series data are considered along with industrial context information. Said in other words, not only textual or linguistic context information are considered as industrial context information. But instead, all kinds of industrial plant-related relevant contextual information may be considered as industrial context information. This is outlined below in more detail with reference to Figure 5.

The all kinds of industrial plant-related relevant contextual information are explicitly not just text, like the industrial domain or plant-specific information or manuals for example. But also multimodal data, like for example:
- topological information, such as: how is a concerned component or plant component embedded in an overall topology, which other components or plant components are there before or after the respective component, what features do these have, what alarms, tuning, etc. The terms 'before' and 'after' are to be understood, for example, when looking at a topology and determining, which first component is connected to a second component and which third component is connected to the second component - a working process may run from the first component to the second component and to the third component. For example, steam runs from a first tank (first component) via a control valve (second component) to a second tank (third component).
- environmental information, such as temperature, humidity, or other time-series information such as seasonality, daytime, etc.
- information about other impact factors for a respectively concerned component, for example, for a distillation columns, this could be level controllers, connected tanks, or quantities such as physical quantities, tank levels, sensor values, key performance indicators (KPIs), which could be represented, for example, in a knowledge graph, or other graph formats.

For example, as illustrated in the system 500 as shown in Figure 5, time series data 501 and industrial context information 502 comprising, for example, sound recordings 502a, video recordings 502b and alarm and events data 502c are stored or are made available in one or more data storages 503.

At a data preparation step 504, time series data 501 and industrial context information 502 may be prepared for one or more devices. For example, time series data for a first device 505a and sound recordings and alarm and events data for the first device 505a may be prepared. Similar preparations may be made for the device 505b and the device 505c. In particular, time series data are aligned with regard to different assets and their corresponding topology and other modalities.

As a result from the data preparation step 504, joint embeddings 506 for time series (TS), video, alarm and events (A&E) and topology may be obtained, by means of step 507, a pre-training pipeline, for example contrastive learning with selectively sparse context.

According to several examples of the present disclosure, the term `sparse' is to be understood in the sense of having fewer "coupled" examples.

In more detail, in the foundation model pre-training pipeline, there could be, for example, a "Contrastive Learning" setup, with selectively sparse contexts, where "sparse" is meant in the sense of having fewer "coupled" examples. I.e., for example, to have only a few time series 501 with a topology context information as industrial context information 502, and to have only a few time series 501 with a temperature context information as industrial context information 502, and to have only a few time series 501 with an industrial segment information as industrial context information 502, etc. Thus, there is a generally very sparse space of data points, but with still enough overlap on all "context" dimensions.

Through having the foundation model according to several examples of the present disclosure to be trained on sparse contexts, i.e. sparse industrial context information, for example through Contrastive Learning, it is allowed also for inputting time series along with sparse contexts, too. Such allowance may be understood as a detectability differentiator, wherein such sparse contexts may be understood as flexible contexts. That means, since the foundation model is not trained with complete contexts (complete industrial context information), i.e., for explanation purposes, the above training data has a time series with topology and another time series with temperature, but only very few with topology and temperature, during inference phase, it is also not required the time series to have this complete information. Rather, it can be handled again also time series with sparse contexts. This allows for great flexibility.

The obtained foundation model 508 (time series with context foundation model as illustrated in Figure 5) may represent such trained language model 203' as outlined above with reference to Figure 2, i.e. such trained generative AI model as outlined above with reference to Figure 3, Steps S340 and S350. Optionally, as already indicated in S350 according to Figure 3, the foundation model 508 may then be finetuned to obtain a finetuned foundation model 509, which may be finetuned for different tasks, for example for anomaly detection or quality predictions. Such finetuning may be made for a certain plant 510, for example such second plant as mentioned above with reference to the method according to Figure 3, Step S350. The second plant 510 may be a greenfield plant or a brownfield plant.

According to several examples of the present disclosure, there is provided a data processing system for obtaining, for industrial applications, foundation model functionalities for time series data of operational processes with industrial context information. The data processing system comprises the data processing apparatus 400 according to Figure 4 and/or comprises means for carrying out the method according to Figure 3. The system may be such system 500 as illustrated according to Figure 5.

According to several examples of the present disclosure, there is provided an industrial plant comprising the data processing apparatus 400 according to Figure 4 and/or the data processing system as outlined above. The industrial plant may be the industrial plant on which the trained generative AI model is to be applied, i.e. the industrial plant may be the second industrial plant as mentioned above with reference to Figure 3.

According to several examples of the present disclosure, there is provided a computer-readable medium comprising instructions which, when executed by a computing system, causes the computing system to perform the method as indicated above with reference to Figures 1 and 2 and/or to perform the method as outlined with reference to Figure 3. The computer-readable medium may be transitory or non-transitory, volatile or non-volatile.

According to several examples of the present disclosure, there is provided a computer program product comprising instructions which, when executed by a computing system, enable or cause the computing system perform the method as indicated above with reference to Figures 1 and 2 and/or to perform the method as outlined with reference to Figure 3. The computer program product may comprise a computer-readable medium comprising instructions of the computer program product. The computer-readable medium as mentioned above may have stored thereon the computer program product.

According to several examples of the present disclosure, there is provided a use of the data processing apparatus 400, the data processing system as outlined above, the industrial plant as outlined above, the computer-readable medium as outlined above, and/or the computer program product as outlined above. In particular, there is provided use of the method as outlined with reference to Figure 3 to obtain, for industrial applications, foundation model functionalities for time series data of operational processes with industrial context information. Moreover, there is provided use of the trained generative AI model (i.e. the trained language model 203' as illustrated in Figure 2) by finetuning the trained generative AI model for the second industrial plant and/or by forecasting an operational process for the second industrial plant.

Optional features of the method as outlined with reference to Figure 3 may form part of the data processing apparatus 400, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A computer-implemented method for obtaining, for industrial applications, foundation model functionalities for time series data (101) of operational processes with industrial context information, the method comprising:
- transforming (S310) the time series data (101) of operational processes associated with at least a first industrial plant into a sequence of time units associated with respective pieces of the operational processes;
- attaching (S320) time units of the sequence of time units with the industrial context information (105),wherein pieces of the industrial context information are associated with the pieces of the operational processes and wherein the time units are attached with concurrent pieces of the industrial context information;
- obtaining (S330) by means of a tokenization method a sequence of context tokens (106) from the attaching, wherein one context token represents one time unit to which concurrent pieces of the industrial context information (105) are attached;
- training (S340) a generative artificial intelligence, Al, model (203) on the sequence of context tokens (106) using a loss function; and
- using (S350) the trained generative AI model (203') having the foundation model functionalities for at least one of: i) finetuning the trained generative AI model (203') for a second industrial plant different from the first industrial plant and ii) forecasting a further progression of an operational process for the second industrial plant.

2. The method according to claim 1, wherein the transforming comprises transforming the time series data into the sequence of time units by mean scaling and/or quantizing the time series data to obtain the sequence of time units.

3. The method according to claim 1 or 2, wherein the attaching comprises attaching each of the time units with a context vector that is related to the pieces of the industrial context information that are associated with the respective time unit.

4. The method according to any of claims 1 to 3,
- wherein the at least first industrial plant comprises a plurality of plant components;
- wherein the time series data comprise plant component time series data of plant component operational processes associated with the plurality of plant components, wherein the plant component operational processes are comprised by the pieces of the operational processes and wherein pieces of the plant component time series data correspond to one or more respective plant components of the plurality of plant components; and
- wherein the pieces of the industrial context information comprise plant component industrial context information that are associated with the plant component operational processes.

5. The method according to any of claims 1 to 4, wherein the pieces of the industrial context information are further indicative of at least one of:
- environmental data associated with the operational processes of the at least first industrial plant,
- environmental data associated with the plant component operational processes of the plurality of plant components,
- an industrial domain in which the at least first industrial plant is operated,
- alarms and events data associated with the at least first industrial plant,
- multimodal data about the plurality of plant components, and
- a topological context in which the at least first industrial plant is embedded.

6. The method according to any of claims 1 to 5, wherein the training comprises performing the training in a self-supervised way by using at least one of the following tasks: multivariate forecasting for the sequence of context tokens and introduction of perturbation in the sequence of context tokens.

7. The method according to any of claims 1 to 6, wherein the finetuning comprises:
- finetuning the trained generative AI model using finetuning training data, wherein the finetuning training data are associated with operational processes of the second industrial plant;
- wherein the forecasting comprises forecasting by use of the finetuned trained generative AI model.

8. The method according to any of claims 1 to 7, wherein the finetuning comprises finetuning the trained generative AI model for at least one of:
- application on the second industrial plant to be operated in a certain type of industry,
- application on the second industrial plant to perform a certain process, and
- application on the second industrial plant to be operated in a certain climate region.

9. The method according to claim 7 or 8, wherein the finetuning training data comprise time series finetuning data and finetuning context information associated therewith, wherein the time series finetuning data and the finetuning context information are associated with operational processes of the second industrial plant and/or with operational processes of plant components of the second industrial plant.

10. The method according to any of claims 1 to 9, wherein the time series data and/or the time series finetuning data comprise at least one of the following three types of training data: historical data from real operational processes, synthetic data from synthetic operational processes, and synthetic data from historical data.

11. The method according to any of claims 1 to 10, wherein the forecasting comprises obtaining probabilistic forecasts for the operational behaviour of the second industrial plant by sampling multiple forecasted future trajectories.

12. The method according to any of claims 1 to 11,
- wherein the loss function is a cross entropy loss function; and/or
- wherein the time units comprise time points and/or time periods; and/or
- wherein the industrial context information are sparse industrial context information and the sequence of context tokens is obtained based on attaching the time units with the sparse industrial context information.

13. A data processing apparatus (400) comprising one or more processors being configured to carry out the method according to any of claims 1 to 12.

14. A computer program product comprising instructions which, when executed by a computing system, enable and/or cause the computing system to perform the method according to any of claims 1 to 12.

15. A computer-readable medium having stored thereon the computer program product according to claim 14.
